# EUROPÄISCHE PATENTSCHRIFT

(11) **EP 0 827 899 B1**
(45) Veröffentlichungstag und Bekanntmachung des Hinweises auf die Patenterteilung: **19.08.1998**
(21) Anmeldenummer: 97115493.5
(22) Anmeldetag: 08.09.1997
(51) Int. Cl.: B62J 1/06

(54) **Federnde Zweirad-Sattelstütze**
Spring saddle support for a twowheeled vehicle
Tige de selle élastique de véhicule à deux roues

(30) Priorität: 09.09.1996 DE 29615658 U
(43) Veröffentlichungstag der Anmeldung: 11.03.1998
(73) Patentinhaber: Simic, Tino, D-47799 Krefeld (DE)
(72) Erfinder: Simic, Tino, D-47799 Krefeld (DE)

(56) Entgegenhaltungen:
- EP-A- 0 350 621
- EP-B- 0 346 628
- DE-U- 9 418 650
- FR-A- 558 202

## Beschreibung

### TECHNISCHES GEBIET

Die Erfindung bezieht sich auf eine Vorrichtung gemäß dem ersten Teil des Patentanspruchs 1 (DE U - 94 18 650) zur federnden Aufhängung des Zweirad Sattels am Fahrzeugrahmen, so daß die durch Bodenunebenheiten wirkenden Stöße nicht an die fahrende Person weitergeleitet werden können.

### STAND DER TECHNIK u. KRITIK

Seit Jahren sind viele federnde Sattelstützen bekannt, ohne daß es denen gelungen ist, den Anforderungen GUT UND KOSTENGÜNSTIG zu entsprechen, auch die Anmeldungen EP 0 346 628 B1 u. DE U - 94 18 650.2 haben nicht zum Erfolg geführt, weil sie entweder zu kompliziert, zu kostenintensiv oder zu schwer waren und damit nicht vermarktbar.

Die gute Befestigung der Anmeldungen EP 0 346 628 B1 u. DE U - 94 18 650.2 ist nicht in Verbindung mit der Drehverhinderung gebracht worden und der Federungskomfort war nicht ausreichend gut gelöst. Insbesondere war die Drehverhinderung bei allen mangelhaft ausgeführt, kräftemäßig den Ansprüchen nicht gewachsen oder zu kompliziert.

### AUFGABE

Die zuvor genannten Nachteile aufzuheben und auf einfache, günstige und dauerhaft sichere Weise eine gute Federung für die fahrende Person zu ermöglichen. Diese Aufgabe wird durch den Gegenstand des Anspruch 1 gelöst.

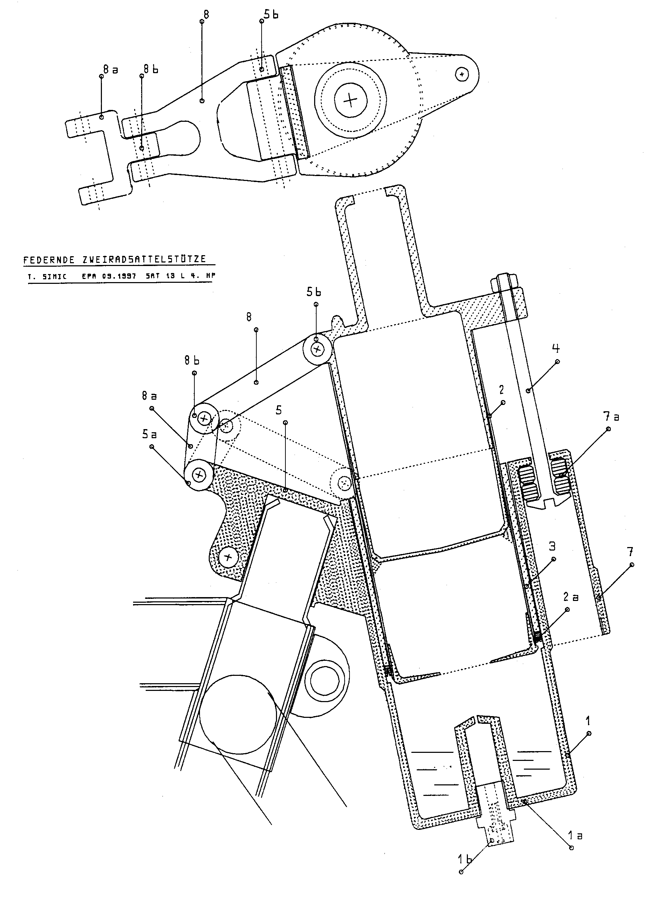

### DARSTELLUNG und BESCHREIBUNG DER ZEICHNUNG

Die vorgestellte Zweirad Sattelstütze, die über eine Luft und Öldämpfüng gegenüber dem Rahmen abgefedert ist, ist im wesentlichen aus zwei über ein Gleitmittel ineinander geführte Teile gebaut und wie folgt gelöst :
**1.) DIE BEFESTIGUNG,**
   Die federnde Sattelstütze ist über dem Befestigungsteil außerhalb des Rahmens, IN GLEICHER LINIE MIT DEN WIRKENDEN KRÄFTEN der Bodenstöße von dem Hinterrad, so befestigt, daß sie bei ihrer Federungsbewegung die kleinstmögliche Reibung zwischen den federnden Teilen aufweist und dadurch den bestmöglichen Federungskomfort bietet.
   **Zusätzlich ist**, ausgehend von dem Befestigungspunkt der Sattelstütze, auf der gegenüberliegenden Seite von der Achse der federnden Teile, ein Teil der Drehverhinderung vorgesehen, dessen Entfernung von der Achse der federnden Teile beliebig weit gewählt werden kann.
**2.) DER FEDERUNGSKOMFORT,**
   ist so gelöst, daß erstmals mittels einer handelsüblichen Fahrradluftpumpe, auf einfache Weise, eine sehr gute Luftfederung mit Öldämpfung, unabhängig von verschiedenen Gewichten der Benutzer und deren Komfortwünschen, in seiner vollen vorgesehenen Länge möglich ist.
3.) **DIE DREHVERHINDERUNG (8) u. (8a)**
   schafft eine Verhinderung der gegenseitigen Verdrehung damit, daß sie die gegenseitigen Kräfte (aus 5a u. 5b) über drehbare Verbindungen zu einem gemeinsamen Drehschnittpunkt (8b) überträgt und dort reibungslos aufhebt, wobei eine leicht gängige Führung der axial gegeneinander federnden Teile garantiert wird.
**Hier ist die wesentliche Verbesserung zu allen bis jetzt Bekannten vorgestellt.**

Je größer der Abstand zwischen der Achse der federnden Teile und dem gemeinsamen Drehschnittpunkt der Drehverhinderung ist, desto günstiger sind die Kräfteverhältnisse innerhalb des Aufbaus der Drehverhinderung. Ähnliche bis jetzt vorgestellte Drehverhinderungen hatten den Nachteil des gleichen Weges, vom federnden Teil zum gemeinsamen Drehschnittpunkt und zurück zu dem stehenden Teil, zu bewältigen.

Deswegen war der Abstand zwischen der Achse der federnden Teile und dem gemeinsamen Drehschnittpunkt nicht beliebig lang ausführbar.

Die neu vorgestellte Drehverhinderung ermöglicht den Vorteil des viel größeren Abstandes zwischen der Achse der federnden Teile und dem gemeinsamen Drehschnittpunkt, weil nur EIN langer Weg bewältigt werden muß und der Weg vom gemeinsamen Drehschnittpunkt zu dem stehenden Teil der federnden Teile ganz kurz gehalten wird. Aus diesem Grund ist die Wirkungsweise der Drehverhinderung und deren Haltbarkeit wesentlich verbessert. Auch die Möglichkeit der Produktion ist wesentlich vereinfacht.

**Das äußere Rohr (Führungsrohr) (1)** ist über das Befestigungsteil (5) am Zweirad Rahmen in Richtung der Hinterradachse befestigt, im unteren Teil (1a) ist ein Luftventil (1b) angebracht und oben, gegenüber dem Befestigungsteil (5), ist ein Anschlagteil (7) für die Schraube (4) befestigt. Oben am Befestigungsteil (5) ist ein Teil der Drehverhinderung (5a) befestigt.

**Das innere Rohr (2)** ist mit einer Lippendichtung (2a) gegen das Führungsrohr (1) abgedichtet, wird im Gleitlager (3) geführt und oben ist die Befestigung der Schraube (4), des Sattels und der zweite Teil der Drehverhinderung (5b) angebracht.

**Die Schraube (4)** ist oben an dem Sattelbefestigungsteil befestigt und dient als Abstandsbegrenzung, so daß das Innenrohr nicht herausgezogen werden kann. Unten ist zwischen der Schraube (4) und dem Anschlagteil (7) eine Rückschlagdämpfung (7a) vorgesehen.

### BESTER WEG DER ERFINDUNGSAUSFÜHRUNG

Die vorgestellte federnde Zweirad Sattelstütze ist in ihren Ausführungen aus einfachen Einzelteilen konstruiert, dadurch kann ihre Produktion entweder zusammen mit den Zweirädern oder auch separat erfolgen, so daß die Sattelstütze auch nachträglich an jedem Zweirad angebracht werden kann.

### GEWERBLICHE ANWENDBARKEIT

Die Erfindung bietet den Vorteil, daß sie nachträglich durch einfache Handhabung an jede bekannte Zweiradrahmenausführung anzubringen ist und somit sehr breit flächig an vielen verschiedenen Zweirädern Einsatzmöglichkeiten finden kann.

## Patentansprüche

1. Federnde Sattelstütze an einem Zweirad, mit einer in wählbarem Druck aufladbaren Luftfeder, die über ein Befestigungsteil (5) am in Rahmen geklemmten Sattelrohr des Zweiradrahmens mit einer Neigung in Richtung auf die Hinterradachse befestigt ist und aus einem Führungsrohr (1) und einem gleitend abgedichteten koaxial darin geführten federnden Teil (2) besteht und bei der achsparallel dazu und an der dem Zweiradrahmen abgewandten Seite zwischen Führungsrohr (1) und dem federnden Teil (2) ein Rückschlagdämpfer (4, 7, 7a) vorgesehen ist,
dadurch gekennzeichnet, daß:
die Luftfeder mit einer Öldämpfung als Enddämpfung versehenen ist und daß als Verdrehsicherung eine asymmetrischer Anordnung so gewählt ist, daß an der dem Zweiradrahmen zugewandten und der der Luftfeder abgewandten Seite des Befestigungsteiles (5) ein erster Hebel (8a) angelenkt ist, mit dessen Ende ein, relativ zum ersten, längerer zweiter Hebel (8) gelenkig verbunden ist, dessen Ende am oberen Ende des federnden Teiles (2) der Luftfeder angelenkt ist.

## Claims

1. A sprung saddle support for a bicycle consisting of a pressure selectable air spring that is fastened onto the normal bicycle saddle support with a clamp (5) and is **axially inclined towards the bicycle's rear axle**. The main body of the device consists of a control tube (1) which contains a sealed, coaxially mounted spring suspension part (2), they being connected together by a shock absorber (4, 7, 7a) fitted at the rear of the main body,
**this is achieved by:**
the air spring is fitted with an oil damping system to prevent end bumping and is also fitted with an asymmetrical arrangement which prevents rotation between the fixed and moving parts of both te bicycle frame and the device itself, the device's support clamp (5) is connected to the first lever (8a), the other end of which being connected to the relatively longer second lever (8), which in turn is connected to the top end of the spring suspension part (2).

## Revendications

1. Support de selle de bicyclette, équipé d'un ressort pneumatique pouvant être chargé à pression variable et fixé à l'aide d'une pièce de fixation (5) au tube de selle serré sur le cadre de la bicyclette, pouvant être incliné **en direction de l'essieu arrière** et se composant d'un tube guide (1) et d'une pièce (2) faisant ressort et coulissant de manière étanche et coaxiale à l'intérieur de ce tube, et sur lequel est prévu un amortisseur de retour (4, 7, 7a) parallèle à l'axe et sur le côté opposé du cadre de la bicyclette entre le tube-guide (1) et la partie coulissante (2),
**caractérisé par le fait que:**
le ressort pneumatique est équipé d'un amortisseur à huile en tant qu'amortisseur final et que la sécurité de torsion est assurée par la disposition assymétrique d'un premier levier (8a) monté de manière articulée sur le côté opposé de la pièce de fixation (5) du ressort pneumatique et à l'extrémité duquel est relié aussi de manière articulée un deuxième levier (8), plus long par rapport au premier, dont l'extrémité est fixée par articulation à l'extrémité supérieure de la partie coulissante (2) du ressort pneumatique.
